## Europäisches Patentamt

## European Patent Office

## Office européen des brevets

(11) Veröffentlichungsnummer: **0 160 203**
**B1**

(12) # EUROPÄISCHE PATENTSCHRIFT

(45) Veröffentlichungstag der Patentschrift:
15.07.87

(51) Int. Cl.⁴: **B 01 D 53/14**

(21) Anmeldenummer: **85103307.6**

(22) Anmeldetag: **21.03.85**

(54) Verfahren zum Entfernen von CO2 und/oder H2S aus Gasen.

(30) Priorität: 29.03.84 DE 3411532
24.07.84 DE 3427133

(43) Veröffentlichungstag der Anmeldung:
06.11.85 Patentblatt 85/45

(45) Bekanntmachung des Hinweises auf die Patenterteilung:
15.07.87 Patentblatt 87/29

(84) Benannte Vertragsstaaten:
AT BE CH DE FR GB IT LI NL SE

(56) Entgegenhaltungen:
FR - A - 2 413 117
US - A - 3 829 494
US - A - 4 217 236
US - A - 4 240 922

(73) Patentinhaber: **BASF Aktiengesellschaft,
Carl-Bosch-Strasse 38, D-6700 Ludwigshafen (DE)**

(72) Erfinder: **Volkamer, Klaus, Dr., Heidelberger Ring 21,
D-6710 Frankenthal (DE)**
Erfinder: **Hefner, Werner, Dr., Danziger Strasse 1c,
D-6840 Lampertheim (DE)**
Erfinder: **Wagner, Eckhart, Dr., Birkenstrasse 21a,
D-6701 Maxdorf (DE)**
Erfinder: **Wagner, Ulrich, Dr., Knospstrasse 7,
D-6703 Limburgerhof (DE)**

## Beschreibung

Die vorliegende Erfindung betrifft ein Verfahren zum Entfernen von $CO_2$ und/oder $H_2S$ aus Gasen mittels einer wässerigen, Alkanolamine enthaltenden Absorptionsflüssigkeit.

Es ist bekannt, z.B. aus A. Kohl und F. Riesenfeld, Gas Purification, 3. Auflage, 1979, insbesondere Seiten 28, 33 und 34, wässerige Lösungen von primären Aminen wie Monoethanolamin zur Entfernung von $CO_2$ und/oder $H_2S$ aus Gasen zu verwenden. Ein Nachteil der Verwendung von wässerigen Lösungen von Monoethanolamin besteht jedoch darin, dass die wässerigen Monoethanolamin-Lösungen, besonders bei höheren Konzentrationen, stark korrosiv wirken. Um Korrosionsschäden in den Gaswaschanlagen zu vermeiden oder zumindest auf ein erträgliches Mass zu mindern, ist es daher erforderlich, in solchen Anlagen in aufwendiger Weise Systeme von Korrosionsinhibitoren einzusetzen, wobei jedoch diese Korrosionsinhibitoren bei $H_2S$-haltigen Gasen gar nicht eingesetzt werden können. Die bekannten Verfahren zur Entfernung von $CO_2$ und/oder $H_2S$ unter Verwendung von primären Alkanolaminen wie Monoethanolamin sind daher nicht zufriedenstellend.

Es besteht daher Bedarf nach einem Verfahren zur Entfernung von $CO_2$ und/oder $H_2S$ aus Gasen, bei dem die Nachteile der bekannten Verfahren vermieden werden können.

Es wurde nun ein vorteilhaftes Verfahren gefunden zum Entfernen von $CO_2$ und/oder $H_2S$ aus $CO_2$ und/oder $H_2S$ enthaltenden Gasen durch eine Wäsche der Gase mit einer wässerigen, Alkanolamine enthaltenden Absorptionsflüssigkeit und unter anschliessender Regeneration der Absorptionsflüssigkeit, welches dadurch gekennzeichnet ist, dass man eine wässerige Absorptionsflüssigkeit verwendet, die 3 bis 60 Gew.% Methyldiethanolamin und 1 bis 50 Gew.% Monoethanolamin enthält, wobei Verfahren mit zwei hintereinandergeschalteten Absorptionsstufen, bei denen die Regenerierung der beladenen Absorptionsflüssigkeit unter Verwendung von zwei Entspannungsstufen und einer Abstreifzone erfolgt, soweit sie die Verwendung einer 0,05 bis 1 Mol/l Monoethanolamin enthaltenden Absorptionsflüssigkeit zum Gegenstand haben, ausgenommen sind. Die ausgenommenen Verfahren sind aus der EP-A-0159495 (Priorität: 10.03.84; Anmeldetag: 01.03.85; Veröffentlichungstag: 30.10.85) bekannt.

Nach dem neuen Verfahren kann gegenüber den bekannten Verfahren eine erhebliche Senkung der Energieverbräuche und der Investitionskosten erreicht werden. Dabei kann das Auftreten von Korrosionsschäden weitgehend vermieden werden, ohne dass ein Zusatz von Korrosionsinhibitoren erforderlich wird.

Als nach dem erfindungsgemässen Verfahren zu behandelnde Gase kommen beispielsweise Kohlevergasungsgase, Koksofengase, Erdgase, Synthesegase oder Raffineriegase in Betracht.

Die Gase weisen im allgemeinen einen $CO_2$-Gehalt von 1 bis 90 Mol.%, vorzugsweise 2 bis 90 Mol.%, insbesondere 5 bis 60 Mol.% auf. Neben dem $CO_2$ können die Gase als weiteres Sauergas $H_2S$ enthalten oder sie können $H_2S$ allein enthalten, z.B. in Mengen von wenigen Mol.ppm, beispielsweise 1 Mol.ppm bis 50 Mol.%, vorzugsweise 10 Mol.ppm bis 40 Mol.%.

Als Lösungsmittel wird für das erfindungsgemässe Verfahren eine wässerige Absorptionsflüssigkeit verwendet, die 3 bis 60 Gew.%, in der Regel 5 bis 60 Gew.%, im allgemeinen 10 bis 60 Gew.%, zweckmässig 20 bis 50 Gew.%, vorzugsweise 25 bis 45 Gew.%, insbesondere 25 bis 35 Gew.% Methyldiethanolamin und 1 bis 50 Gew.%, zweckmässig 5 bis 40 Gew.%, vorzugsweise 10 bis 30 Gew.%, insbesondere 15 bis 20 Gew.% Monoethanolamin enthält.

Die Methyldiethanolamin und Monoethanolamin enthaltende wässerige Absorptionsflüssigkeit kann zusätzlich noch ein physikalisches Lösungsmittel enthalten. Geeignete physikalische Lösungsmittel sind beispielsweise N-Methylpyrrolidon, Tetramethylensulfon, Methanol, Oligoethylenglykoldialkylether wie Oligoethylenglykolmethylisopropylether (SEPASOLV MPE®), Oligoethylenglykoldimethylether (SELEXOL®). Das physikalische Lösungsmittel ist in der Absorptionsflüssigkeit im allgemeinen in Mengen von 1 bis 60 Gew.%, vorzugsweise 10 bis 50 Gew.%, insbesondere 20 bis 40 Gew.% enthalten.

Für die Entfernung von $CO_2$ und/oder $H_2S$ aus dem zu reinigenden Gas durch Behandlung mit der erfindungsgemäss zu verwendenden Absorptionsflüssigkeit werden in der Absorptionszone im allgemeinen Temperaturen von 30 bis 90° C, vorzugsweise 35 bis 80° C, insbesondere 40 bis 60° C, angewendet. Zweckmässig werden in der Absorptionszone Drücke von 5 bis 110 bar, vorzugsweise 10 bis 100 bar, insbesondere 20 bis 90 bar, angewendet. Die Absorption kann in einer Absorptionsstufe oder in zwei hintereinandergeschalteten Absorptionsstufen durchgeführt werden. Im allgemeinen wird die Absorption einstufig durchgeführt. Für die Absorption werden zweckmässig Absorptionskolonnen verwendet, im allgemeinen eine Füllkörperkolonne oder eine mit Böden ausgestattete Kolonne. Das gereinigte Gas wird. zweckmässig am Kopf der Absorptionszone abgezogen. Die im allgemeinen am Sumpf der Absorptionszone abgezogene, mit den Sauergasen $CO_2$ und/oder $H_2S$ beladene Absorptionsflüssigkeit wird zur Regenerierung zweckmässig einer Abstreifzone zugeführt. Die in der Abstreifzone ausgetriebenen Sauergase werden zweckmässig am Kopf der Abstreifzone abgezogen. Die am Sumpf der Abstreifzone erhaltene regenerierte Absorptionsflüssigkeit wird zweckmässig in die Absorptionszone zurückgeführt. Als Abstreifzone wird zweckmässig eine Abstreifkolonne verwendet, im allgemeinen eine Füllkörperkolonne oder eine mit Böden ausgestattete Kolonne. In der Abstreifzone werden im allgemeinen Temperaturen von 100 bis 130° C, vorzugsweise 105 bis 125° C, insbesondere 110 bis 120° C, angewendet, entsprechend der Siedetemperatur der Absorptionsflüssigkeit bei Betriebsdruck der Abstreifkolonne.

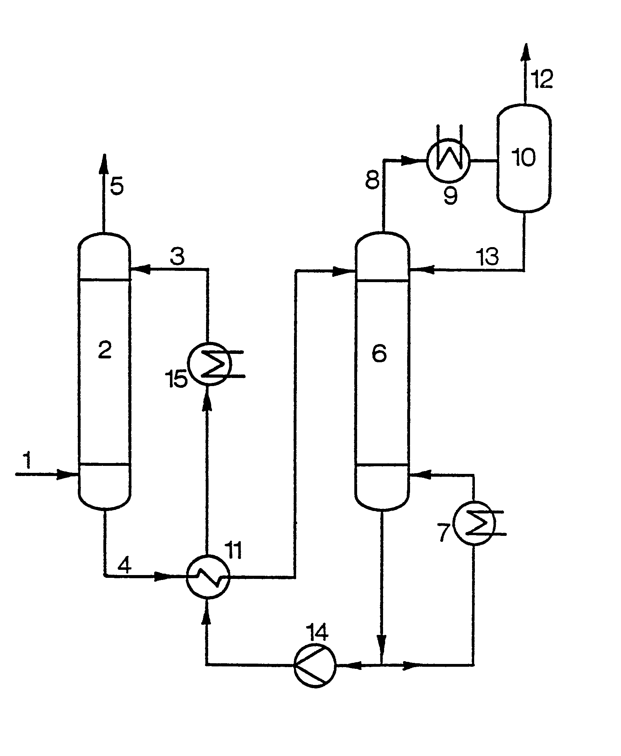

Nachfolgend werden weitere Einzelheiten der Erfindung anhand eines Ausführungsbeispieles, dessen Verfahrensablauf in der Figur schematisch dargestellt ist, erläutert.

Ein $CO_2$ und/oder $H_2S$ enthaltendes Gas, z.B. ein $CO_2$ als Sauergas enthaltendes Synthesegas, wird über Leitung 1 unter Druck in den Sumpf der Absorptionskolonne 2 eingeführt. Gleichzeitig wird über Leitung 3 als Absorptionsflüssigkeit eine beispielsweise 12 bis 22 Gew.% Monoethanolamin und 20 bis 40 Gew.% Methyldiethanolamin enthaltende wässerige Lösung auf den Kopf der Absorptionskolonne gegeben. Das zu reinigende Gas und die Absorptionsflüssigkeit werden im Gegenstrom geführt. Am Kopf der Absorptionskolonne wird über Leitung 5 das Produktgas abgezogen. Die am Sumpf der Absorptionskolonne erhaltene, mit den Sauergasen beladene wässerige Absorptionsflüssigkeit wird anschliessend in einem Wärmetauscher 11 erhitzt und dann zur Regenerierung auf den Kopf der Abstreifkolonne 6 gegeben, in der durch Wärme und Wasserdampf die in Absorptionskolonne 2 absorbierten sauren Gase aus der beladenen Absorptionsflüssigkeit ausgetrieben werden. Die dafür benötigte Wärmeenergie wird von einem Aufkocher 7 aufgebracht und die sauren Gase $CO_2$ und/oder $H_2S$ steigen in der Abstreifkolonne zusammen mit Wasserdampf nach oben. Die sauren Gase $CO_2$ und/oder $H_2S$ verlassen zusammen mit dem Wasserdampf sowie geringen Mengen Lösungsmitteldämpfen die Abstreifkolonne über Leitung 8. In einem Kühler 9 wird der Gasstrom 8 gekühlt, wobei Wasser und das in geringen Mengen im Dampf vorhandene Lösungsmittel auskondensieren. Wasser und die Lösungsmittelspuren werden in einem Behälter 10 gesammelt. Über eine Leitung 12 werden die sauren Gase $CO_2$ und/oder $H_2S$ aus der Anlage ausgetragen. Über eine Leitung 13 wird das im Behälter 10 zurückgewonnene Wasser mit Spuren der im Lösungsmittel eingesetzten Alkanolamine in die Abstreifkolonne zurückgeführt. Vom Sumpf der Abstreifkolonne 6 wird über die Leitung 3 mittels einer Lösungsmittelumwälzpumpe 14 die regenerierte Absorptionsflüssigkeit zur Absorptionskolonne 2 nach Durchströmen des Wärmeaustauschers 11 und Kühlers 15 zurückgeführt.

Die folgenden Beispiele veranschaulichen die Erfindung.

## Beispiel 1

In einer Absorptionskolonne wurden 0,22 kmol/h eines Gases aus 10 Mol.% $CO_2$ und 90 Mol.% Stickstoff mit 15 kg/h einer wässerigen Absorptionsflüssigkeit, die 15 Gew.% Monoethanolamin und 35 Gew.% Methyldiethanolamin enthielt, gewaschen. In der Absorptionskolonne wurde ein Druck von 30 bar aufrechterhalten. Die Zulauftemperatur der Absorptionsflüssigkeit betrug 50° C. Der $CO_2$-Gehalt in dem die Absorptionskolonne verlassenden Reingas betrug 68 Vol.ppm. Die mit $CO_2$ beladene Absorptionsflüssigkeit wurde am Sumpf der Absorptionskolonne abgezogen und nach Entspannung auf den Kopf einer Abstreifkolonne gegeben, in der die beladene Absorptionsflüssigkeit durch Dampfstrippung regeneriert wurde. Der am Kopf der Abstreifkolonne abgezogene Gasstrom enthielt 99 Vol.% $CO_2$ und 1 Vol.% $N_2$. Die regenerierte Absorptionsflüssigkeit wurde auf den Kopf der Absorptionskolonne zurückgeführt.

## Beispiel 2

Eine Gaswäsche wurde, wie in Beispiel 1 beschrieben, durchgeführt, wobei jedoch eine wässerige Absorptionsflüssigkeit mit einem Gehalt von 20 Gew.% Monoethanolamin und 30 Gew.% Methyldiethanolamin angewendet wurde. Dabei wurde ein Reingas mit einem $CO_2$-Gehalt von 13 Vol.ppm erhalten.

## Beispiel 3

Eine Gaswäsche wurde, wie in Beispiel 1 beschrieben, durchgeführt, wobei jedoch eine wässerige Absorptionsflüssigkeit mit einem Gehalt von 20 Gew.% Monoethanolamin und 20 Gew.% Methyldiethanolamin angewendet wurde. Dabei wurde ein Reingas mit einem $CO_2$-Gehalt von 23 Vol.ppm erhalten.

## Vergleichsbeispiel 1

Ein Vergleichsversuch wurde, wie in den Beispielen 1 bis 3 beschrieben, durchgeführt, wobei jedoch als Absorptionsflüssigkeit eine 20 Gew.% Monoethanolamin enthaltende wässerige Lösung verwendet wurde. Dabei wurde ein Reingas mit einem $CO_2$-Gehalt von 2,3 Vol.% erhalten, d.h. der $CO_2$-Gehalt im Reingas gemäss dem Vergleichsbeispiel war um den Faktor 1000 höher als der $CO_2$-Gehalt im Reingas gemäss Beispiel 3.

## Vergleichsbeispiel 2

In einem weiteren Vergleichsversuch wurde, wie in den obigen Beispielen beschrieben, eine Gaswäsche durchgeführt, wobei mit einer wässerigen Absorptionsflüssigkeit mit einem Gehalt von 15 Gew.% Monoethanolamin und 35 Gew.% Methyldiethanolamin die Absorptionsflüssigkeitsmenge so weit reduziert wurde, bis am Kopf der Absorptionskolonne der $CO_2$-Gehalt im Reingas 2,3 Vol.% betrug. Die dazu benötigte Lösungsmittelumlaufmenge betrug 11,6 kg/h. Im Vergleich zu Vergleichsbeispiel 1 konnte die umlaufende Absorptionsflüssigkeitsmenge und damit die zur Regenerierung benötigte Energiemenge um ca. 22% gesenkt werden.

## Patentansprüche

1. Verfahren zum Entfernen von $CO_2$ und/oder $H_2S$ aus $CO_2$ und/oder $H_2S$ enthaltenden Gasen durch eine Wäsche der Gase mit einer wässerigen, Alkanolamine enthaltenden Absorptionsflüssigkeit und unter anschliessender Regeneration der Absorptionsflüssigkeit, *dadurch gekennzeichnet*, dass man eine wässerige Absorptionsflüssigkeit verwendet, die 3 bis 60 Gew.% Methyldiethanolamin und 1 bis 50 Gew.% Monoethanolamin enthält, wobei Verfahren mit zwei hintereinandergeschalteten Absorptionsstufen, bei denen die Regenerierung der beladenen Absorptionsflüssigkeit unter Verwendung von zwei Entspannungsstufen und einer Abstreifzone erfolgt, soweit sie die Verwendung einer 0,05 bis 1 Mol/l Monoethanolamin enthaltenden Absorptionsflüssigkeit zum Gegenstand haben, ausgenommen sind.

2. Verfahren nach Anspruch 1, *dadurch gekennzeichnet*, dass die Absorptionsflüssigkeit zusätzlich ein physikalisches Lösungsmittel enthält.

## Claims

1. A process for removing $CO_2$ and/or $H_2S$ from a gas containing $CO_2$ and/or $H_2S$ by washing the gas with an aqueous alkanolamine-containing absorption liquid and subsequently regenerating the latter, wherein the aqueous absorption liquid used contains from 3 to 60% by weight of methyldiethanolamine and from 1 to 50% by weight of monoethanolamine, processes with two absorption stages arranged in series, in which regeneration of the laden absorption liquid is carried out using two flash stages and a stripping zone, to the extent they utilize an absorption liquid containing from 0.05 to 1 mole of monoethanolamine per litre, being excluded.

2. A process as claimed in claim 1, wherein the absorption liquid additionally contains a physical solvent.

## Revendications

1. Procédé d'extraction du $CO_2$ et(ou) du $H_2S$ de mélanges gazeux contenant du $CO_2$ et(ou) du $H_2S$ par un lavage des mélanges gazeux avec une solution d'absorption aqueuse, contenant des alcanol-amines, suivi de la régénération de la solution d'absorption, caractérisé en ce que l'on emploie une solution d'absorption aqueuse renfermant 3 à 60% en poids de méthyl-diéthanol-amine et 1 à 50% en poids de mono-éthanol-amine, étant cependant exclus les procédés comportant deux stades d'absorption successifs et dans lesquels la régénération de la solution d'absorption chargée est réalisée dans deux stades de détente et dans une zone de stripage, dans lesquels il est fait usage d'une solution d'absorption contenant entre 0,05 et 1 mole de mono-éthanol-amine par litre.

2. Procédé suivant la revendication 1, caractérisé en ce que la solution d'absorption contient en outre un solvant physique.